# FASCICULE DE BREVET EUROPEEN

(11) **EP 1 986 979 B1**
(45) Date de publication et mention de la délivrance du brevet: **21.12.2011**
(21) Numéro de dépôt: 07731661.0
(22) Date de dépôt: 23.02.2007
(51) Int. Cl.: C04B 35/484, C03B 5/43

(54) **REFRACTAIRE A FORTE TENEUR EN ZIRCONE A GRANDE RESISTIVITE**
HOCHRESISTENTES FEUERFESTES MATERIAL MIT HOHEN ZIRKONIUMGEHALT
HIGH-RESISTIVITY REFRACTORY HAVING A HIGH ZIRCONIA CONTENT

(30) Priorité: 24.02.2006 FR 0601661; 16.10.2006 FR 0654305
(43) Date de publication de la demande: 05.11.2008
(73) Titulaire: Saint-Gobain Centre de Recherches et d'Etudes Européen, 92400 Courbevoie (FR)
(72) Inventeur: BOUSSANT-ROUX, Yves, Lexington, Virginia 02420 (US); CABODI, Isabelle, F-84300 Cavaillon (FR); GAUBIL, Michel, F-30133 Les Angles (FR)
(74) Mandataire: Leszczynski, André
(86) Numéro de dépôt international: PCT/FR2007/050843
(87) Numéro de publication internationale: WO 2007/099253

(56) Documents cités:
- EP-B1- 0 403 387
- WO-A-2005/068393
- FR-A1- 2 701 022

## Description

L'invention concerne un nouveau produit réfractaire fondu et coulé à forte teneur en zircone.

Parmi les produits réfractaires, on distingue les produits fondus et coulés, bien connus pour la construction des fours de fusion du verre, et les produits frittés.

A la différence des produits frittés, les produits fondus et coulés comportent le plus souvent une phase vitreuse intergranulaire reliant des grains cristallisés. Les problèmes posés par les produits frittés et par les produits fondus et coûtés, et les solutions techniques adoptées pour les résoudre, sont donc généralement différents. Une composition mise au point pour fabriquer un produit fritté n'est donc pas *a priori* utilisable telle quelle pour fabriquer un produit fondu et coulé, et réciproquement.

Les produits fondus et coulés, souvent appelés électrofondus, sont obtenus par fusion d'un mélange de matières premières appropriées dans un four à arc électrique ou par toute autre technique adaptée à ces produits. Le liquide fondu est ensuite coulé dans un moule puis le produit obtenu subit un cycle de refroidissement contrôlé pour être amené à température ambiante sans fracturation. Cette opération est appelée « recuisson » par l'homme de l'art.

Parmi les produits fondus et coulés, les produits électrofondus à forte teneur en zircone, c'est-à-dire comportant plus de 85% en poids de zircone (ZrO₂), sont réputés pour leur qualité de très grande résistance à la corrosion sans coloration du verre produit et sans génération de défauts.

Classiquement, les produits fondus et coulés à forte teneur en zircone comportent également de l'oxyde de sodium (Na₂O) pour éviter la formation de zircon à partir de la zircone et de la silice présentes dans le produit. La formation de zircon est en effet néfaste puisqu'elle s'accompagne d'une diminution de volume de l'ordre de 20%, créant ainsi des contraintes mécaniques à l'origine de fissures.

Le produit ER-1195 produit et commercialisé par la Société Européenne des Produits Réfractaires et couvert par le brevet EP-B-403 387 est aujourd'hui largement utilisé dans les fours de fusion du verre. Sa composition chimique comprend environ 94% de zircone, 4 à 5% de silice, environ 1% d'alumine, 0,3% d'oxyde de sodium et moins de 0,05% en poids de P₂O₅. Elle est typique des produits à forte teneur en zircone utilisés pour les fours verriers.

FR 2 701 022 décrit des produits fondus et coulés à forte teneur en zircone qui contiennent 0,05 à 1,0% en poids de P₂O₅ et 0,05 à 1,0% en poids d'oxyde de bore B₂O₃. Ces produits présentent une résistivité électrique élevée. Cela permet avantageusement de stabiliser la consommation électrique lors de la fusion électrique du verre et surtout d'éviter tout problème de court circuit dans les réfractaires entraînant leur dégradation rapide. En effet, lors de la fusion électrique du verre une partie du courant électrique passe à travers les produits réfractaires. L'augmentation de la résistivité de ces produits réfractaires permet donc de réduire la quantité de courant électrique susceptible de les parcourir.

WO 2005 068393 décrit des produits fondus et coulés à forte teneur en zircone présentant une résistivité électrique élevée tout en minimisant les teneurs en BaO, SrO, MgO, CaO, P₂O₅, Na₂O et K₂O. Ces produits contiennent 0,1 à 1,2% en poids de B₂O₃.

L'actuel développement de verres de très haute qualité, en particulier des verres pour écrans plats de type LCD, augmente les exigences pour les produits réfractaires des fours de fusion du verre. En particulier, il existe un besoin pour des produits réfractaires présentant une résistivité électrique encore améliorée tout en conservant une bonne résistance à la corrosion par le verre fondu.

La présente invention vise à satisfaire ce besoin.

Plus particulièrement, elle concerne un produit réfractaire fondu et coulé à forte teneur en zircone selon la revendication 1.

Les revendications dépendant de la revendication 1 définissent des modes de réalisation particuliers de l'invention.

Comme on le verra plus loin, de manière surprenante, le produit réfractaire selon l'invention présente une résistivité électrique remarquable, tout en conservant une bonne résistance à la corrosion par le verre fondu.

De préférence, le produit réfractaire selon l'invention comporte encore une ou, de préférence, plusieurs, des caractéristiques optionnelles suivantes.
- La quantité pondérée de dopant est supérieure ou égale à 0,5%, de préférence supérieure ou égale à 0,6 %, de préférence à 1,2% et/ou inférieure ou égale à 3%, de préférence à 2,5 %, de préférence inférieure ou égale à 1,4 %,
- Le dopant est choisi parmi Nb₂O₅, Ta₂O₅, WO₃ et leurs mélanges, de préférence parmi Nb₂O₅, Ta₂O₅ et leurs mélanges.
- La quantité de silice SiO₂ est supérieure ou égale à 2%, de préférence à 3 %, de préférence à 3,8 %, et/ou inférieure ou égale à 8 %.
- Le rapport Al₂O₃/SiO₂ est inférieur à 0,5, de préférence est inférieur à 0,3, de préférence toujours inférieur à 0,25. Cette caractéristique est particulièrement avantageuse lorsque la teneur en silice est inférieure à 2%.
- La quantité de B₂O₃ est supérieure à 0,05%, de préférence à 0,1%, et/ou inférieure à 1%. Une quantité de B₂O₃ supérieure à 0,1 %, voire supérieure à 0,2%, voire même supérieure à 0,25%, est notamment souhaitable lorsque SiO₂ < 3%.
- Le produit ne comporte pas de V₂O₅.
- La quantité d'oxyde d'yttrium Y₂O₃ est inférieure ou égale à 1 %, de préférence inférieure à 0,5 %, de préférence encore inférieure à 0,2 %.
- La quantité d'oxyde de bore B₂O₃ est inférieure ou égale à 1 %, de préférence inférieure à 0,50 %.
- La quantité de zircone ZrO₂ + HfO₂ est supérieure ou égale à 90 %, de préférence supérieure ou égale à 93%.
- La quantité d'alumine Al₂O₃ est supérieure ou égale à 0,5 %, de préférence supérieure ou égale à 0,6 % et/ou Inférieure ou égale à 1,5%, de préférence inférieure ou égale 1%, de préférence encore inférieure ou égale à 0,85 %.
- Le produit réfractaire présente la composition suivante, avec ZrO₂ + HfO₂ comme complément à 100 %,
- SiO₂ : 3,8 % à 4,8 %
- B₂O₃ : < 0,25 %
- Al₂O₃ : 0,65 % à 0,85 %
- Y₂O₃ : < 0,45 %
- entre 0,8 % et 1,2 % de Ta₂O₅ ou entre 0,4 % et 0,9 % de Nb₂O₅.
- La quantité d'impuretés (essentiellement les oxydes de fer, de titane, de phosphore et de calcium) est inférieure à 0,6%, de préférence à 0,3%.

Avantageusement, ces caractéristiques permettent d'améliorer encore la résistivité électrique et la résistance à la corrosion du produit selon l'invention.

Le produit réfractaire selon l'invention présente de préférence une résistivité électrique supérieure ou égale à 200 Ω.cm, de préférence supérieure ou égale à 400 Ω.cm, de préférence encore supérieure ou égale à 600 Ω.cm à 1500°C à la fréquence de 100Hz. Cette résistivité, à 950°C, peut être supérieure ou égale à 10 000 Ω.cm, de préférence supérieure ou égale à 20 000 Ω.cm, et de préférence encore supérieure ou égale à 25 000 Ω.cm. Elle peut même être supérieure à 28 000 Ω.cm.

L'invention concerne également un four de fusion de verre comportant un produit réfractaire selon l'invention, ou un produit réfractaire fabriqué ou susceptible d'être fabriqué suivant un procédé selon l'invention, en particulier dans les régions destinées à être en contact avec le verre fondu. Dans le four selon l'invention, le produit réfractaire peut avantageusement faire partie d'une cuve de préparation de verre par fusion, notamment par fusion électrique, où il est susceptible d'entrer en contact avec du verre fondu à une température supérieure à 1200°C.

Le produit réfractaire selon l'invention n'est pas prévu pour être mis en contact avec des verres fondus à des températures inférieures à 1100°C.

L'invention concerne aussi une cuve d'électrolyse, par exemple pour l'électrolyse de l'aluminium, comprenant une pluralité de blocs réfractaires, au moins un desdits blocs étant un produit réfractaire selon l'invention ou un produit réfractaire fabriqué ou susceptible d'être fabriqué suivant un procédé selon l'invention. Ce produit peut en particulier appartenir à la paroi latérale de la cuve. Il peut être disposé dans une région où il est susceptible d'entrer en contact avec de la cryolithe fondue.

L'invention concerne enfin un procédé de fabrication d'un produit réfractaire selon l'invention, comprenant les étapes successives suivantes :
a) mélange de matières premières, avec introduction d'un dopant, de manière à former une charge de départ,
b) fusion de ladite charge de départ Jusqu'à obtention d'un liquide en fusion,
c) coulage et solidification dudit liquide en fusion, par refroidissement contrôle, de manière à obtenir un produit réfractaire,
ce procédé étant remarquable en ce que lesdits matières premières sont choisies de manière que ledit produit réfractaire soit conforme à l'invention.

La teneur ou quantité « pondérée » en dopant désigne ici la quantité 8,84.CrO₃+1,66.Nb₂O₅+6,14.MoO₃+Ta₂O₅+3,81.WO₃
de préférence la quantité
4,42.CrO₃+1,66.Nb₂O₅+3,07.MoO₃+Ta₂O₅+1,91.WO₃
où les teneurs en oxydes sont exprimées en pourcentages massiques.

Sauf mention contraire, tous les pourcentages de la présente description sont des pourcentages massiques sur la base des oxydes.

Dans les produits fondus et coulés selon l'invention, la forte teneur en zircone, c'est-à-dire ZrO₂ > 85 %, permet de répondre aux exigences de haute résistance à la corrosion sans coloration du verre produit ni génération de défauts nuisibles à la qualité de ce verre.

L'oxyde d'hafnium, HfO₂, présent dans le produit selon l'invention est l'oxyde d'hafnium naturellement présent dans les sources de zircone. Sa teneur dans le produit selon l'invention est donc inférieure ou égale à 5%, généralement Inférieure ou égale à 2%.

La présence de silice est nécessaire à la formation d'une phase vitreuse intergranulaire permettant d'accommoder de manière efficace les variations de volume de la zircone lors de sa transformation allotropique réversible, c'est-à-dire lors du passage de la phase monoclinique à la phase tétragonale. En revanche, l'ajout de silice ne doit pas dépasser 10 % car, se faisant au détriment de la teneur en zircone, la résistance à la corrosion s'en trouverait diminuée.

La présence d'alumine est nécessaire à la formation d'une phase vitreuse stable et à la bonne coulabilité des produits dans le moule. Une teneur excessive entraîne une instabilité de la phase vitreuse (formation de cristaux).

De préférence, le produit selon l'invention comporte une quantité de B₂O₃ inférieure ou égale à 0,5 %. L'oxyde de bore a en effet un effet défavorable sur la formation de zircon dans le produit. Cet élément permet d'améliorer la faisabilité des produits.

L'oxyde d'yttrium Y₂O₃ a un effet défavorable sur la résistivité électrique, mais sa présence peut être tolérée en quantité inférieure à 1 %, de préférence inférieure à 0,5 %, de préférence encore à 0,2 %.

La présence de dopant est nécessaire dans les produits de l'invention pour améliorer la résistivité électrique. Cependant la teneur totale pondérée de ces oxydes ne doit pas, de préférence, dépasser 4 % pour que le pourcentage de zircone soit maintenu à un niveau suffisamment élevé pour assurer une excellente résistance à la corrosion par le verre en fusion et conserver une bonne stabilité de la phase vitreuse.

Les inventeurs ont constaté que tous les dopants pentavalents ont un effet sensiblement identique à quantités molaires identiques. Il en est de même pour tous les dopants hexavalents. De plus, les inventeurs ont observé une efficacité molaire environ deux fois plus importante pour les dopants hexavalents M⁶⁺ que pour que les dopants pentavalents M⁵⁺. Sans être liés par une théorie, les inventeurs expliquent cette différence par le rôle des dopants vis-à-vis des lacunes en oxygène de la zircone. Les dopants hexavalents M⁶⁺ compenseraient en effet deux lacunes en oxygène contre une seule pour les dopants pentavalents M⁵⁺. Une mole d'oxyde d'un dopant pentavalent M₂O₅ aurait donc un effet identique à une mole d'oxyde d'un dopant hexavalent MO₃.

Dans la quantité pondérée en dopant, il convient également de tenir compte des différences entre les masses molaires des dopants. Ainsi 1,66 grammes de Ta₂O₅ ont un effet équivalent à un gramme de Nb₂O₅.

Le complément à 100 % dans la composition du produit selon l'invention est constitué par les autres espèces. On entend par « autres espèces », des espèces dont la présence n'est pas particulièrement souhaitée et qui sont généralement présentes à titre d'impuretés dans les matières premières.

On peut citer les oxydes alcalins, en particulier l'oxyde de sodium Na₂O et l'oxyde de potassium K₂O, qui peuvent être tolérés mais ne doivent pas, de préférence, dépasser 0,5%, de préférence 0,1%, de préférence encore n'être présents que sous forme de traces. Sinon la résistivité électrique serait dégradée en raison de la conductivité accrue de la phase vitreuse. Les oxydes de fer, de titane et de phosphore sont connus pour être néfastes et leur teneur doit être limitée à des traces introduites à titre d'impuretés avec les matières premières. De préférence, la quantité de Fe₂O₃ + TiO₂ est inférieure à 0,55 % et celle de P₂O₅ est inférieure à 0,05 %.

Un produit selon l'invention peut être fabriqué suivant les étapes a) à c) décrites ci-dessous :
a) mélange de matières premières, avec introduction d'un dopant, de manière à former une charge de départ,
b) fusion de ladite charge de départ jusqu'à obtention d'un liquide en fusion,
c) solidification dudit liquide en fusion, par refroidissement contrôlé de manière à obtenir un produit réfractaire selon l'invention.

A l'étape a), l'ajout de dopant est réalisé de manière à garantir une teneur en dopant dans le produit fini conforme à l'invention.

A l'étape b), la fusion est de préférence réalisée grâce à l'action combinée d'un arc électrique assez long, ne produisant pas de réduction, et d'un brasage favorisant la réoxydation des produits.

Pour minimiser la formation de nodules d'aspect métallique et éviter la formation de fentes ou fendillements dans le produit final, il est préférable d'opérer la fusion dans des conditions oxydantes.

Préférentiellement on utilise le procédé de fusion à l'arc long décrit dans le brevet français n° 1208577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes.

A l'étape c), le refroidissement est de préférence effectué à une vitesse inférieure à 20°C par heure, de préférence à la vitesse d'environ 10°C par heure.

Tout procédé conventionnel de fabrication de produits fondus à base de zircone destinés à des applications dans des fours de fusion de verre peut être mis en oeuvre, pourvu que la composition de la charge de départ permette -d'obtenir des produits présentant une composition conforme à celle du produit selon l'invention.

Les exemples non limitatifs suivants sont donnés dans le but d'illustrer l'invention.

Dans ces exemples, on a employé les matières premières suivantes :
- de la zircone contenant principalement, en moyenne massique, 98,5% de ZrO₂ + HfO₂, 0,2% de SiO₂ et 0,02 % de Na₂O,
- du sable de zircone à 33 % de silice,
- de l'alumine de type AC44 vendue par da société Pechiney et contenant en moyenne 99,4 % d'alumine Al₂O₃,
- des oxydes de bore, yttrium, tantale Ta₂O₅ et de niobium Nb₂O₅ de pureté supérieure à 99%.

Les produits 1 à 39 ont été préparés selon le procédé classique de fusion en four à arc puis coulés pour obtenir des blocs de format 220x450x150mm.

Les produits 40 à 43 ont été fabriqués suivant un procédé utilisant une fusion par induction, comme décrit dans FR 1 430 962, avec une spire de diamètre 275 mm, une puissance comprise entre 120 et 220 kW et une fréquence délivrée par le générateur apériodique comprise entre 100 et 250 kHz.

L'analyse chimique des produits obtenus est donnée dans le tableau 1 ; il s'agit d'une analyse chimique moyenne, donnée en pourcentages massiques.

Dans ce tableau, une case vide correspond à une quantité inférieure ou égale à 0,05% massique. * indique que l'exemple est en dehors de l'invention.

Sur les différents exemples de blocs réalisés, des barreaux cylindriques de produit de 30 mm de diamètre et de 30 mm de hauteur ont été soumis à une différence de potentiel de 1 volt à une fréquence de 100 Hertz à 1500°C pour réaliser des mesures de résistivité électrique R.

**Tableau 1**

| | ZrO₂ | SiO₂ | B₂O₃ | Al₂O₃ | Al₂O₃/ SiO₂ | Na₂O | Nb₂O₅ | Ta₂O₅ | Y₂O₃ | Ta₂O₅+ 1,66 Nb₂O₅ | R (Ω.cm) |
|---|---|---|---|---|---|---|---|---|---|---|---|
| 1* | 94,5 | 4,0 | | 1,2 | 0,30 | 0,3 | | | | | 70 |
| 2* | 91,3 | 7,0 | 0,6 | 1,1 | 0,16 | | | | | | 95 |
| 3* | 94,6 | 4,3 | 0,3 | 0,5 | 0,12 | 0,1 | | | 0,2 | | 139 |
| 4* | 89,8 | 8,3 | 0,6 | 1,2 | 0,14 | | | | 0,1 | | 165 |
| 5 | 93,0 | 5,4 | 0,6 | 0,5 | 0,09 | | | 0,2 | 0,3 | 0,2 | 221 |
| 6 | 94,0 | 4,4 | 0,3 | 0,9 | 0,20 | | | 0,2 | 0,2 | 0,2 | 217 |
| 7 | 92,8 | 5,5 | 0,4 | 0,9 | 0,16 | | 0,3 | | 0,1 | 0,5 | 335 |
| 8 | 94,1 | 4,0 | 0,3 | 0,9 | 0,23 | | | 0,5 | 0,2 | 0,5 | 334 |
| 9 | 92,9 | 5,1 | 0,5 | 0,8 | 0,16 | | | 0,6 | 0,1 | 0,6 | 376 |
| 10 | 94,8 | 3,2 | 0,2 | 0,7 | 0,22 | | | 0,6 | 0,5 | 0,6 | 249 |
| 11 | 94,1 | 4,0 | 0,1 | 0,7 | 0,18 | | | 0,7 | 0,4 | 0,7 | 680 |
| 12 | 93,8 | 4,1 | 0,5 | 0,8 | 0,20 | | | 0,7 | 0,1 | 0,7 | 390 |
| 13* | 93,3 | 3,6 | 0,3 | 0,7 | 0,19 | | | 0,7 | 1,4 | 0,7 | 63 |
| 14 | 94,5 | 3,9 | 0,3 | 0,8 | 0,21 | | 0,4 | | 0,1 | 0,7 | 325 |
| 15 | 93,3 | 4,6 | 0,4 | 0,7 | 0,15 | 0,1 | | 0,8 | 0,1 | 0,8 | 244 |
| 16 | 93,5 | 4,4 | 0,4 | 0,8 | 0,18 | | | 0,8 | 0,1 | 0,8 | 370 |
| 17 | 91,0 | 6,1 | 0,5 | 1,0 | 0,16 | | 0,1 | 0,8 | 0,5 | 1,0 | 273 |
| 18 | 94,1 | 4,0 | 0,3 | 0,9 | 0,22 | | 0,6 | | 0,1 | 1,0 | 558 |
| 19* | 96,3 | 1,5 | 0,2 | 0,9 | 0,57 | | | 1,0 | 0,2 | 1,0 | 95 |
| 20 | 93,6 | 4,1 | 0,3 | 0,9 | 0,21 | | | 1,1 | 0,1 | 1,1 | 526 |
| 21 | 90,4 | 6,6 | 0,7 | 0,9 | 0,14 | 0,1 | 0,3 | 0,6 | 0,4 | 1,1 | 346 |
| 22 | 93,2 | 4,4 | 0,3 | 0,9 | 0,19 | | | 1,2 | 0,1 | 1,2 | 528 |
| 23 | 93,5 | 4,6 | 0,2 | 0,8 | 0,18 | | 0,8 | | 0,1 | 1,3 | 648 |
| 24 | 94,4 | 3,7 | 0,2 | 0,9 | 0,23 | | 0,8 | | | 1,3 | 404 |
| 25 | 93,3 | 4,3 | | 0,9 | 0,20 | | | 1,4 | 0,1 | 1,4 | 436 |
| 26 | 93,3 | 3,5 | 0,3 | 0,7 | 0,20 | | | 1,4 | 0,8 | 1,4 | 204 |
| 27 | 93,8 | 4,1 | | 0,8 | 0,20 | | 0,3 | 0,9 | 0,1 | 1,4 | 359 |
| 28 | 88,1 | 8,4 | 0,6 | 1,2 | 0,15 | | | 1,6 | 0,1 | 1,6 | 456 |
| 29 | 93,0 | 4,6 | 0,3 | 0,9 | 0,20 | | 0,6 | 0,6 | | 1,6 | 477 |
| 30 | 92,2 | 5,0 | 0,4 | 0,7 | 0,14 | | 0,3 | 1,2 | 0,2 | 1,7 | 373 |
| 31 | 89,4 | 6,8 | 0,5 | 1,4 | 0,20 | | | 1,7 | 0,2 | 1,7 | 448 |
| 32 | 93,4 | 4,0 | 0,3 | 0,8 | 0,20 | | 0,8 | 0,5 | 0,2 | 1,8 | 427 |
| 33 | 92,3 | 4,5 | | 1,0 | 0,22 | | | 2,1 | 0,1 | 2,1 | 335 |
| 34 | 90,9 | 5,2 | 0,4 | 0,7 | 0,13 | | 0,2 | 2,0 | 0,6 | 2,3 | 360 |
| 35 | 92,5 | 4,4 | 0,4 | 0,7 | 0,16 | | 1,5 | | 0,5 | 2,5 | 261 |
| 36 | 91,5 | 4,7 | 0,4 | 0,8 | 0,16 | | 0,3 | 2,1 | 0,2 | 2,6 | 253 |
| 37 | 96,9 | 1,5 | 0,3 | 0,5 | 0,33 | | 0,7 | | 0,1 | 1,2 | 356 |
| 38 | 90,2 | 7,4 | 0,9 | 0,3 | 0,04 | | | 1,2 | | 1,2 | 322 |
| 39 | 86,5 | 8,8 | 1,4 | 1,5 | 0,17 | | | 1,8 | | 1,8 | 480 |
| 40 | 94,0 | 3,7 | 0,3 | 0,8 | 0,22 | | | 1,2 | | 1,2 | 448 |
| 41 | 94,9 | 3,5 | 0,3 | 0,8 | 0,23 | | 0,5 | | | 0,8 | 460 |
| 42 | 94,6 | 3,6 | 0,2 | 0,8 | 0,22 | | 0,8 | | | 1,3 | 429 |
| 43 | 93,3 | 4,2 | 0,3 | 1,1 | 0,26 | | 0,5 | 0,6 | | 1,4 | 370 |

Ces exemples montrent que les ajouts de dopants permettent d'augmenter significativement la résistivité électrique des produits réfractaires fondus et coulés à forte teneur en zircone et ce dès que la teneur totale en dopant pondérée (Ta₂O₅ + 1,66.Nb₂O₅) est supérieure à 0,2 %, de préférence supérieure à 0,5 % en pourcentage massique sur la base des oxydes. Les produits de l'invention présentent alors une résistivité électrique supérieure à 200 Ohm.cm.

Les exemples du tableau 1 illustrent également l'équivalence molaire des différents dopants. Cette équivalence apparaît notamment en comparant les valeurs (Ta₂O₅ + 1,66.Nb₂O₅) et la résistivité R des exemples 7 et 8 ou 12 et 14.

D'autres essais ont montré que lorsqu'on augmente la teneur totale en dopant pondérée au delà de 3% en poids, on n'obtient pas d'augmentation supplémentaire de la résistivité électrique. Il est de plus préférable que la teneur totale en dopant pondérée soit limitée à 3 % en poids pour que le pourcentage de zircone soit maintenu à un niveau suffisamment élevé pour assurer une excellente résistance à la corrosion par le verre en fusion.

Les exemples, en particulier l'exemple 23 qui correspond à la composition préférée, montrent également que l'effet des ajouts de dopant est maximum lorsque la teneur totale en dopant pondérée est comprise entre 0,5 et 2 %, en pourcentage massique.

L'exemple 19* et la comparaison des exemples 9 et 10 ou bien 23 et 24 indiquent que l'augmentation de la teneur en silice est favorable pour améliorer la résistivité électrique des produits. La teneur en silice doit donc être supérieure à 2 % et, de préférence supérieure à 3 % en pourcentage massique sur la base des oxydes.

On observe également qu'il est avantageux que les produits présentent une quantité de B₂O₃ supérieure à 0,05%, de préférence supérieure à 0,1%, voire supérieure à 0,2%, en particulier lorsque SiO₂ < 3%.

L'exemple 13*, la comparaison des exemples 23 et 24 et, dans une moindre mesure, l'exemple 26 indiquent que l'augmentation de la teneur en oxyde d'yttrium est défavorable si on souhaite améliorer la résistivité électrique des produits.

On observe également qu'il est préférable de limiter la teneur en Na₂O à des valeurs inférieures ou égales à 0,1 %, de préférence inférieures ou égales à 0,05 %. De préférence, le produit selon l'invention ne comporte que des traces de Na₂O. En effet, comme le montre une comparaison des exemples 15 et 16, la présence d'oxyde de sodium Na₂O a un effet défavorable sur la résistivité électrique en raison de la faible résistivité de la phase vitreuse.

On observe enfin, au regard des exemples 40 à 43, que l'utilisation d'un four à induction conduit également à une bonne résistivité électrique. D'autres essais ont également permis de constater que, de manière surprenante, l'utilisation d'un four à induction à fusion et solidification continues, comme décrit dans FR 1 430 962, permet de fabriquer des produits dont la teneur en zircone est particulièrement homogène.

Par ailleurs, d'autres essais ont permis de vérifier que les autres propriétés reconnues pour les matériaux à forte teneur en zircone, en particulier la résistance à la corrosion par le verre, ne sont pas dégradées par la présence d'un dopant selon l'invention.

Les produits de l'invention pourront avantageusement être utilisés dans toute autre application nécessitant un produit réfractaire ayant une résistivité électrique élevée. En particulier, de tels produits peuvent être utiles pour la construction des cuves d'électrolyse de l'aluminium dans lesquelles de l'aluminium métal peut être produit industriellement par électrolyse d'alumine en solution dans un bain à base de cryolithe fondue.

Le bain d'électrolyte est classiquement contenu dans une cuve d'électrolyse. La cuve comporte une paroi latérale et un fond. Le fond est composé de blocs de fond réfractaires et de blocs cathodiques et, en partie basse, de blocs isolants. La paroi latérale est formée au moyen de blocs réfractaires latéraux, ceinturés d'une enveloppe métallique, ou « casing », plus ou moins isolée.

Les blocs sont utilisés à des températures inférieures ou égales à 950°C.

La résistivité électrique à 950°C de l'exemple 18 de l'invention a donc été comparée à celle d'un bloc de référence à base de carbure de silicium (SiC) lié par une matrice de nitrure de silicium (Si₃N₄), selon le même protocole que précédemment, mais à une température de 950°C.

La résistivité électrique à 950°C de l'exemple 18 est de 30 000 Ω.cm alors que celle du bloc de référence est de 6 000 Ω.cm.

Le niveau de résistance à la corrosion par la cryolithe a été évalué en maintenant, pendant 22 heures à 1030°C dans un bain de cryolithe fondue, des échantillons, de section 25mmx25mm, de l'exemple 18 et du bloc de référence. L'échantillon de l'exemple 18 présente un volume corrodé (diminution du volume résultant de la corrosion) deux fois moins important que celui du bloc de référence.

Les produits réfractaires selon l'invention sont donc parfaitement adaptés à une utilisation dans une cuve d'électrolyse, notamment de l'aluminium; en particulier comme élément d'une paroi latérale d'une telle cuve et/ou dans une zone où ils peuvent entrer en contact avec de la cryolithe fondue.

Bien entendu, la présente invention n'est pas limitée aux modes de réalisation décrits et représentés fournis à titre d'exemples illustratifs et non limitatifs.

## Revendications

1. Produit réfractaire fondu et coulé à forte teneur en zircone, comportant, en pourcentages massiques sur la base des oxydes et pour un total de plus dé 98,5% :
- ZrO₂ + Hf₂O : > 85 %
- SiO₂ : 1 % à 10 %
- Al₂O₃ : 0,1 % à 2,4 %
- B₂O₃ < 1,5%, et
- un dopant choisi dans le groupe formé par Nb₂O₅, Ta₂O₅, et WO₃, et leurs mélanges, et optionnellement CrO₃, MoO₃ et leurs mélanges, en une quantité pondérée telle que
0,2 % ≤ 8,84.CrO₃+1,66.Nb₂O₅+6,14.MoO₃+Ta₂O₅+3,81.WO₃

2. Produit réfractaire selon la revendication 1, dans lequel ladite quantité pondérée est telle que
0,2 % ≤ 4,42.CrO₃+1,66.Nb₂O₅+3,07.MoO₃+Ta₂O₅+1,91.WO₃

3. Produit réfractaire selon l'une quelconque des revendications précédentes, dans lequel la quantité de silice SiO₂ est supérieure ou égale à 2 %.

4. Produit réfractaire selon l'une quelconque des revendications précédentes, dans lequel le rapport Al₂O₃ / SiO₂ est inférieur à 0,5.

5. Produit réfractaire selon la revendication précédente, dans lequel le rapport Al₂O₃ / SiO₂ est inférieur à 0,3.

6. Produit réfractaire selon l'une quelconque des revendications précédentes, dans lequel la quantité pondérée de dopant est supérieure ou égale à 0,5 % et inférieure ou égale à 3 %.

7. Produit réfractaire selon l'une quelconque des revendications précédentes, dans lequel la quantité pondérée de dopant est supérieure ou égale à 0,6% et inférieure ou égale à 1,4%.

8. Produit réfractaire selon l'une quelconque des revendications précédentes, dans lequel la quantité de silice SiO₂ est supérieure ou égale à 3 % et inférieure ou égale à 8 %.

9. Produit réfractaire selon l'une quelconque des revendications précédentes, dans lequel la quantité de B₂O₃ est supérieure à 0,05% et inférieure à 1%, et dans lequel la quantité de SiO₂ est inférieure à 3%.

10. Produit, réfractaire selon l'une quelconque des revendications précédentes, dans lequel la quantité de Y₂O₃ est inférieure ou égale à 1 % et/ou la teneur en alumine (Al₂O₃) est inférieure ou égale à 1 %, et/ou la teneur en Na₂O est inférieure à 0,1 %, en pourcentages massiques sur la base des oxydes.

11. Produit réfractaire selon l'une quelconque des revendications précédentes, présentant la composition suivante, avec ZrO₂ + HfO₂ et les impuretés comme complément à 100%.
- SiO₂ : 3,8% à 4,8 %
- B₂O₃ : < 0,25%
- Al₂O₃ : 0,65 % à 0,85 %
- Y₂O₃ : < 0,45 %
- entre 0,8 % et 1,2 % de Ta₂O₅ ou entre 0,4 % et 0,9 % de Nb₂O₅.

12. Four de fusion du verre, caractérisé en qu'il comporte un produit réfractaire selon l'une quelconque des revendications précédentes.

13. Four selon la revendication précédente, ledit produit réfractaire faisant partie d'une cuve de préparation de verre par fusion électrique, où il est susceptible d'entrer en contact avec du verre fondu à une température supérieure à 1200°C.

14. Cuve d'électrolyse comprenant une pluralité de blocs réfractaires, **caractérisée en ce qu'**au moins un desdits blocs est un produit réfractaire selon l'une quelconque des revendications 1 à 11.

## Claims

1. A fused and cast refractory product with a high zirconia content comprising, as a percentage by weight relative to the oxides and for a total of more than 98.5%:
• ZrO₂ + Hf_{2O} : > 85%
• SiO₂ : 1% to 10%
• Al₂O₃ : 0.1% to 2.4%
• B₂O₃ : < 1.5%; and
• a dopant selected from the group formed by Nb₂O₅, Ta₂O₅, WO₃, and mixtures thereof, and optionally CrO₃, MoO₃ and mixtures thereof, in a weighted quantity such that: 0.2% ≤ 8.84CrO₃+1.66Nb₂O₅+6.14MoO₃+Ta₂O₅+3.81WO₃.

2. A refractory product according to claim 1, in which said weighted quantity is such that: :
0.2% ≤ 4.42CrO₃+1.66Nb₂O₅+3.07MoO₃+Ta₂O₅+1.91WO₃.

3. A refractory product according to any preceding claim, in which the quantity of YₐO₃ is 2% or more.

4. A refractory product according to any preceding claim, in which the Al₂O₃/SiO₂ ratio is less than 0.5.

5. A refractory product according to the preceding claim, in which the Al₂O₃/SiO₂ ratio is less than 0.3.

6. A refractory product according to any preceding claim, in which the weighted quantity of dopant is 0.5% or more, and 3% or less.

7. A refractory product according to any preceding claim, in which the weighted quantity of dopant is 0.6% or more and 1.4% or less.

8. A refractory product according to any preceding claim, in which the quantity of silica, SiO₂, is 3% or more and 8% or less.

9. A refractory product according to any preceding claim, in which the quantity of B₂O₃ is greater than 0.05% and less than 1%, and in which the quantity of SiO₂ is less than 3%.

10. A refractory product according to any preceding claim, in which the quantity of Y₂O₃ is 1% or less and/or the quantity of alumina (Al₂O₃) is 1% or less, and/or the quantity of Na₂O is less than 0.1%, as a percentage by weight relative to the oxides.

11. A refractory product according to any preceding claim, having the following composition, with ZᵣO₂ + HfO₂ and the impurities as the complement to 100%:
- SiO₂: 3.8% to 4.8%
- B₂O₃: < 0.25%
- Al₂Q₃: 0.65% to 0.85%
- Y₂O₃: < 0.45%
From 0.8% to 1.2% of Ta₂O₅ or from 0.4% to 0.9% of Nb₂O₅.

12. A glass fusion furnace, **characterized in that** it comprises a refractory product according to any preceding claim.

13. A furnace according to the preceding claim, said refractory product being part of a vessel for the preparation of glass by electric fusion, where it may enter into contact with molten glass at a temperature higher than 1,200°C.

14. An electrolysis vessel comprising a plurality of refractory blocks, **characterized in that** at least one of said blocks is a refractory product according to any one of claims 1 to 11.

## Patentansprüche

1. Feuerfestes Produkt, welches geschmolzen und gegossen ist, mit einem hohen Gehalt an Zirkon, welches in Massenprozenten auf der Basis von Oxyden und für eine Gesamtheit von mehr als 98,5% beinhaltet:
- ZrO₂ + Hf₂O: > 85%
- SiO₂ : 1% bis 10%
- Al₂O₃ : 0,1% bis 2,4%
- B₂O₃ : < 1,5% und
- ein Dotiermaterial, welches ausgewählt ist aus der durch Nb₂O₅, Ta₂O₅, und WO₃ gebildeten Gruppe sowie deren Mischungen und optional CrO₃, MoO₃ und deren Mischungen, in einer gewichteten Menge wie folgt:
0,2% ≤ 8,84.CrO₃+1,66.Nb₂O₅+6,14.MoO₃+Ta₂O₅+3,81.WO₃

2. Feuerfestes Produkt nach Anspruch 1, in welchem die besagte gewichtete Menge derart ist, dass:
0,2%≤ 4,42.CrO₃+1,66.Nb₂O₅+3,07.MoO₃+Ta₂O₅+1,91.WO₃

3. Feuerfestes Produkt nach einem der vorhergehenden Ansprüche, in welchem die Menge an Silicat SiO₂ größer oder gleich 2% ist.

4. Feuerfestes Produkt nach einem der vorhergehenden Ansprüche, in welchem das Verhältnis von Al₂O₃/ SiO₂ kleiner als 0,5 ist.

5. Feuerfestes Produkt nach dem vorhergehenden Anspruch, in welchem das Verhältnis Al₂O₃/ SiO₂ kleiner als 0,3 ist.

6. Feuerfestes Produkt nach einem der vorhergehenden Ansprüche, in welchem die gewichtete Menge des Dotiermaterials größer oder gleich 0,5% und kleiner oder gleich 3% ist.

7. Feuerfestes Produkt nach einem der vorhergehenden Ansprüche, in welchem die gewichtete Menge des Dotiermaterials größer oder gleich 0,6% und kleiner oder gleich 1,4% ist.

8. Feuerfestes Produkt nach einem der vorhergehenden Ansprüche, in welchem die Menge an Silicat SiO₂ größer oder gleich 3% und kleiner oder gleich 8% ist.

9. Feuerfestes Produkt nach einem der vorhergehenden Ansprüche, in welchem die Menge an B₂O₃ größer als 0,05% und kleiner als 1% ist und in welchem die Menge an SiO₂ kleiner als 3% ist.

10. Feuerfestes Produkt nach einem der vorhergehenden Ansprüche, in welchem die Menge an Y₂O₃ kleiner oder gleich 1% ist und/oder der Gehalt an Aluminat (Al₂O₃) kleiner oder gleich 1% ist, und/oder der Gehalt an Na₂O₃ kleiner als 0,1% ist in Massenprozent auf der Basis von Oxyden.

11. Feuerfestes Produkt nach einem der vorhergehenden Ansprüche, das folgende Zusammensetzung aufweist mit ZrO₂+ HfO₂ und Verunreinigungen, um 100% zu komplettieren:
SiO₂ : 3,8% bis 4,8%
- B₂O₃ : < 0,25%
- Al₂O₃ : 0,65% bis 0,85%
- Y₂O₃ : < 0,45%
-zwischen 0,8% und 1,2% Ta₂O₅ oder zwischen 0,4% und 0,9% Nb₂O₅.

12. Glasschmelzofen, **dadurch gekennzeichnet, dass** er aus einem feuerfesten Material gemäß einem der vorhergehenden Ansprüche besteht.

13. Ofen nach dem vorhergehenden Anspruch, wobei das besagte feuerfeste Produkt Teil einer Wanne für die Zubereitung von Glas durch Elektroschmelze ist, wobei es geeignet ist, in Kontakt mit geschmolzenem Glas bei einer Temperatur oberhalb von 1200°C zu kommen.

14. Elektrolysewanne mit einer Vielzahl von feuerfesten Blöcken, **dadurch gekennzeichnet, dass** wenigstens einer dieser Blöcke ein feuerfestes Produkt gemäß einem der Ansprüche 1 bis 11 ist.
